# EUROPÄISCHE PATENTANMELDUNG

(11) **EP 4 302 659 A1**
(43) Veröffentlichungstag der Anmeldung: **10.01.2024**
(21) Anmeldenummer: 23181565.5
(22) Anmeldetag: 26.06.2023
(51) Int. Cl.: A47J 31/42, A47J 42/40

(54) **MAHLVORRICHTUNG FÜR KAFFEE, KAFFEEMASCHINE MIT EINER MAHLVORRICHTUNG FÜR KAFFEE UND VERFAHREN ZUM BETRIEB DER MAHLVORRICHTUNG**

(30) Priorität: 08.07.2022 DE 102022117063
(71) Anmelder: Melitta Europa GmbH & Co. KG, 32427 Minden (DE)
(72) Erfinder: KUTZBACH, Daniel, 32429 Minden (DE); PARNELL, Marc, 32429 Minden (DE)
(74) Vertreter: Dantz, Jan Henning

(57) **Zusammenfassung**

Eine Mahlvorrichtung (1) für Kaffee, die ein Mahlwerk (2) zum Mahlen des Kaffees zu Kaffeemehl, umfasst. Die Mahlvorrichtung weist außerdem einen Schacht (4) und ein Ausgabeelement (5) zur Ausgabe des Kaffeemehls aus dem Schacht auf, sodass das Kaffeemehl in einen Auffangbehälter (3) ausgegeben werden kann, der sich unter dem Ausgabeelement (5) befindet. Das Ausgabeelement (5) weist mindestens zwei Elektroden (6) auf, durch die die Luft in dem Ausgabeelement (5) ionisierbar ist. Hierdurch kann durch Reibung geladenes Kaffeemehl entladen und so zielgerichteter in den Auffangbehälter geführt werden.

## Beschreibung

Die vorliegende Erfindung betrifft eine Mahlvorrichtung für Kaffee, die ein Mahlwerk zum Mahlen des Kaffees zu Kaffeemehl, umfasst, wobei die Mahlvorrichtung außerdem einen Schacht und ein Ausgabeelement zur Ausgabe des Kaffeemehls aus dem Schacht umfasst, sodass das Kaffeemehl in einen Auffangbehälter ausgegeben werden kann, der sich unter dem Ausgabeelement befindet. Des Weiteren umfasst die vorliegende Erfindung eine Kaffeemaschine, die eine erfindungsgemäße Mahlvorrichtung umfasst, sowie ein Verfahren zum Betrieb einer Mahlvorrichtung.

### Stand der Technik

WO 2018 035978 A1 offenbart eine Mahlvorrichtung zum Mahlen von Kaffee zu Kaffeemehl. Hierzu weist die Mahlvorrichtung ein Mahlwerk, sowie einen Schacht, in dem zwei Elektroden eines Plasmagenerators vertikal übereinander angeordnet sind, und eine Auslassöffnung auf, wobei das Kaffeemehl durch den Schacht und die Auslassöffnung in einen Auffangbehälter ausgegeben wird. Während des Mahlvorgangs entsteht Reibung zwischen dem Mahlwerk und den Kaffeepartikeln, sowie unter den Kaffeepartikeln untereinander, sodass das Kaffeemehl elektrostatisch aufgeladen wird. Dies führt dazu, dass ein Teil des Kaffeemehls nach dem Verlassen der Auslassöffnung nicht in den Auffangbehälter gelangt, sondern von anderen Oberflächen der Mahlvorrichtung und ihrer Umgebung angezogen wird und auf ihnen aufgrund der statischen Aufladung anhaftet. Gemäß WO 2018 035978 A1 entlädt ein durch den Plasmagenerator im Schacht der Mahlvorrichtung erzeugtes Plasma die Kaffeepartikel, bevor das Kaffeemehl die Auslassöffnung der Mahlvorrichtung erreicht.

DE 198 32 413 A1 offenbart eine Kaffeemaschine mit einer Kaffeemühle und einem in Ausgaberichtung des Kaffeemehls zulaufenden Ausgabeelement, wobei die Kaffeemaschine die elektrostatische Ladung von Kaffeemehl mittels ionisierter Luft neutralisieren kann.

WO 2020/144719 A1 offenbart eine Kaffeemühle, die den Aufbau elektrostatischer Ladung des Kaffeemehls mittels elektrischer Spannung verhindern kann.

JP H08-8753 Y2 offenbart eine Kaffeemühle, die elektrisch geladenes Kaffeemehl mittels Koronaentladung entladen kann.

In CN 2 16 167 010 U ist eine Kaffeemühle offenbart, die einen lonengenerator mit einer Elektrode umfasst, die in einen kurvenförmigen Ausgabeschacht für Kaffeemehl hineinragt und im direkten Kontakt zu den Kaffeepartikeln steht, sodass das Kaffeemehl mittels ionisierter Luft elektrostatisch geladen werden kann.

US 2016/0192809 A1 offenbart eine Kaffeemühle, die Kaffeemehl mittels mehrerer axial in einen Ausgabeschacht hervorstehender Elektrodenspitzen, vor der Ausgabe des Kaffeemehls mittels eines Ausgabetrichters, elektrostatisch entlädt.

Ein Problem des Standes der Technik ist, dass sehr hohe Spannungen zur Erzeugung des Plasmas notwendig sind, was zudem auch die Sicherheit eines Anwenders der Mahlvorrichtung reduziert. Außerdem ist es ein Problem der vertikalen Anordnung der Elektroden des Standes der Technik im Schacht, dass sie zu einer ungleichmäßigen Verteilung des Plasmas im Schacht führt, was eine gleichmäßige Entladung der Kaffeepartikel, vor allem auch aufgrund einer zumindest teilweise vorhandenen Variabilität der Korngröße des Kaffeemehls, erschwert. Zudem können sich Kaffeepartikel auf den Elektroden absetzen, was die Bildung von Schmutz innerhalb der Mahlvorrichtung, insbesondere auf den Elektroden und somit auch deren Korrosion beschleunigen kann. Des Weiteren befinden sich die Kaffeepartikel nach dem Entladen in der Luft, weshalb eine weitere statische Beeinflussung durch Reibung an dem Gehäuse reduziert ist.

Es ist daher Aufgabe der vorliegenden Erfindung, eine verbesserte Mahlvorrichtung für die Zerkleinerung von Kaffee zu Kaffeemehl zu schaffen, die das Kaffeemehl vor dessen Ausgabe in einen Auffangbehälter entlädt, die eine gleichmäßigere Entladung der ausgegebenen Kaffeepartikel erreichen, mit erhöhter Sicherheit betrieben und einfacher gereinigt werden kann.

Die vorliegende Erfindung löst diese Aufgaben mit einer Mahlvorrichtung mit den Merkmalen des Anspruches 1.

### Beschreibung

Die erfindungsgemäße Mahlvorrichtung für Kaffee weist ein Mahlwerk zum Mahlen des Kaffees zu Kaffeemehl, sowie einen Schacht und ein Ausgabeelement zur Ausgabe des Kaffeemehls aus dem Schacht, sodass das Kaffeemehl in einen Auffangbehälter ausgegeben werden kann, auf. Der Auffangbehälter befindet sich unter dem Ausgabeelement, wobei das Ausgabeelement mindestens zwei Elektroden aufweist, durch die die Luft in dem Ausgabeelement ionisierbar ist. Hierdurch wird das Kaffeemehl vor der Ausgabe in den Auffangbehälter durch den Kontakt der geladenen Kaffeepartikel mit gegensätzlich geladenen Partikeln entladen, was die Wahrscheinlichkeit fehlgeleitete Kaffeepartikel zielgerichteter zu entladen erhöht. Weiterhin liegt zum Ionisieren der Luft in dem Ausgabeelement eine niedrigere Spannung zwischen den mindestens zwei Elektroden an, als sie zur Plasmaerzeugung notwendig wäre, was die Sicherheit der Mahlvorrichtung erhöht. Das Ionisieren der Luft im Ausgabeelement verringert zudem auch die Gefahr eines Kurzschlusses innerhalb der Mahlvorrichtung, beispielsweise am Mahlwerk, im Vergleich zur Plasmageneration im Schacht der Mahlvorrichtung. Zusätzlich lassen sich die dem Kaffee ausgesetzten mindestens zwei Elektroden in dem Ausgabeelement einfach mit einem Tuch, Pinsel oder Ähnlichem reinigen, ohne dass eine Demontage der Mahlvorrichtung notwendig ist.

Vorzugsweise sind die mindestens zwei Elektroden auf derselben Höhe innerhalb des Ausgabeelementes angeordnet. Die an den mindestens zwei Elektroden anliegende Spannung beträgt insbesondere zwischen 12 V und 5000 V. Die Spannung ist vorzugsweise eine Gleichspannung, sie kann aber auch eine Wechselspannung sein. Hierdurch ist eine gleichmäßigere Verteilung der elektrischen Feldstärke über den gesamten Bereich des Ausgabeelementes, aus dem der Kaffee in den Auffangbehälter gelangt, gewährleistet, was eine erhöhte Kontrolle der Ladung der Kaffeepartikel nach dem Kontakt mit der ionisierten Luft ermöglicht. Zu diesem Zweck bilden die mindestens zwei Elektroden vorzugsweise zwischen 5 % und 90 % einer Innenoberfläche des Ausgabeelements aus und haben vornehmlich eine Fläche von 25 mm² bis 2500 mm². Die Elektroden können beispielsweise aus Aluminium, Kupfer ausgebildet sein.

Ein oberer Abschnitt des Ausgabeelements kann in einer bevorzugten Ausführungsform die Form eines sich nach unten aufweitenden Kegelstumpfes aufweisen, was eine gleichmäßigere Verteilung des Kaffees im Auffangbehälter ermöglicht. und das Volumen des Auffangbehälters kann zudem besser ausgenutzt werden.

In einer Ausführungsform der vorliegenden Erfindung weist ein oberer Abschnitt des Ausgabeelements die Form eines sich nach unten aufweitenden Kegelstumpfes auf, was eine gleichmäßigere Verteilung des Kaffees im Auffangbehälter ermöglicht, sodass dessen Volumen besser ausgenutzt werden kann.

Hierdurch kann außerdem das Geschmackserlebnis eines insbesondere mittels des Auffangbehälters zubereiteten Getränks verbessert werden. Die nach unten aufgeweitete Form des Ausgabeelementes ermöglicht des Weiteren eine besonders einfache Reinigung der Mahlvorrichtung auch im montierten Zustand, da ein Benutzer möglicherweise verschmutzte Innenflächen einfach erreichen kann.

Die Mantellinie und die Kegelachse des Kegelstumpfes können für eine besonders vorteilhafte Ausgestaltung und ein besonders einfache Reinigung bevorzugt einen Winkel zwischen 10° und 60° zueinander aufweisen, wobei für einen weiteren Abschnitt und/oder anstelle des Kegelstumpfes auch die Form eines Zylinders eingesetzt sein kann. Der Auffangbehälter kann als Becher oder auch als Sieb oder Trichter ausgebildet sein und einen Kaffeefilter enthalten, sodass der Auffangbehälter unmittelbar nach einer Befüllung zur Zubereitung eines Getränks verwendet werden kann.

In einer Ausführungsform kann die Spannung an den mindestens zwei Elektroden ein- und ausgeschaltet werden. In einer weiteren Ausführungsform der vorliegenden Erfindung kann die Spannung an den mindestens zwei Elektroden, und somit die elektrische Feldstärke im Ausgabeelement für den eingestellten Mahlgrad des Mahlwerkes und somit an die Korngröße des Kaffeemehl optimiert sein, beispielsweise sodass Kaffeepartikel mit einer mittleren Korngröße das elektrische Feld soweit entladen werden, dass ihre Ladung im Sinne der vorliegenden Erfindung unerheblich ist. In einer weiteren Ausführungsform kann der Mahlgrad des Mahlwerks durch den Benutzer der Mahlvorrichtung eingestellt werden, wobei die Mahlvorrichtung die Spannung automatisch an den Mahlgrad anpasst. Vorzugsweise ist der Mahlgrad für eine maximale Korngröße des Kaffeemehls zwischen 0,03 mm und 1,5 mm und noch bevorzugter zwischen 0,5 und 0,8 mm einstellbar. Hierdurch verbraucht die Mahlvorrichtung nur so viel Strom, wie sie zum Entladen des Kaffeemehls benötigt und bei einem gröberen Mahlgrad lässt sich die Spannung erhöhen um eine ausreichende Entladung der Kaffeepartikel zu gewährleisten.

Zur vereinfachten Demontage der Mahlvorrichtung sind die mindestens zwei Elektroden vorzugsweise so weit voneinander entfernt angeordnet, dass sie sich außerhalb eines Innenraums des Ausgabeelementes befinden. Die Positionierung der mindestens zwei Elektroden außerhalb des Innenraums des Ausgabeelementes führt zu einer verringerten Ablagerung von Kaffeemehl auf den mindestens zwei Elektroden, also zu verringerter Schmutzbildung und daraus folgender Korrosion der mindestens zwei Elektroden gegenüber dem Stand der Technik. Zudem lässt sich das Ausgabeelement auf diese Art unabhängig von einer Demontage der mindestens zwei Elektroden aus der Mahlvorrichtung entfernen und vereinfacht reinigen. Selbes trifft auch auf eine Demontage der mindestens zwei Elektroden, die unabhängig von einer Demontage des Ausgabeelementes ist, zu. Auch der Schacht und/oder das Mahlwerk können aus der Mahlvorrichtung herausnehmbar ausgebildet sein. Der Schacht kann in vertikaler Linie direkt unter der Mahlvorrichtung angeordnet sein, er kann aber auch versetzt neben der Mahlvorrichtung und/oder geneigt zur Vertikalen montiert sein und beispielsweise Fliehkräfte anstelle oder zusätzlich zur Schwerkraft zur Beförderung des Kaffeemehls in den, beziehungsweise durch den Schacht einsetzen. Der Schacht kann aus Metall, aber auch aus Kunststoff ausgebildet sein, was die Wahrscheinlichkeit eines Kurzschlusses innerhalb der Mahlvorrichtung verringert.

Vornehmlich beträgt die Distanz zwischen den mindestens zwei Elektroden in direkter Linie zwischen 10 mm und 40 mm, wobei die mindestens zwei Elektroden bei einer kegelstumpfartigen und/oder zylindrischen Ausgestaltung des Ausgabeelementes auch auf einer Sekante der Innenseiten eines horizontalen Querschnitts des Ausgabeelementes liegen können.

Die dem Kaffeemehl ausgesetzte Oberfläche der mindestens zwei Elektroden weist in einer Ausführungsform der vorliegenden Erfindung dieselbe Wölbung, beziehungsweise Oberflächengestaltung wie das Ausgabeelement auf, sodass die mindestens zwei Elektroden im Wesentlichen flächenbündig im Ausgabeelement montiert werden können, die Oberfläche kann aber auch unabhängig davon flach ausgebildet sein, was die Produktionskosten der Mahlvorrichtung senken kann, da beispielsweise keine Abdichtung am Rand der Elektroden notwendig ist. Vorzugsweise sind die mindestens zwei Elektroden als Stifte ausgebildet, die flächenbündig in mindestens zwei Aussparungen im Ausgabeelement angeordnet sind.

In einer weiteren Ausführungsform sind die mindestens zwei Elektroden als Spitzen ausgebildet, die in mindestens zwei Aussparungen im Ausgabeelement angeordnet sind. Die mindestens zwei Spitzen weisen an der dicksten Stelle vorzugsweise jeweils einen Durchmesser von 0,2 mm bis 2 mm auf und laufen an ihrem Ende im Wesentlichen kegelförmig, beziehungsweise spitzwinklig zu. Vorzugsweise sind die Spitzen parallel zur Vertikalen in der Mahlvorrichtung und noch bevorzugter auch außerhalb des Innenraums des Ausgabeelements angeordnet, sodass eine Schmutzbildung auf den Elektroden reduziert ist.

Die vorliegende Erfindung umfasst weiterhin eine Kaffeemaschine, eine erfindungsgemäße Mahlvorrichtung umfasst. Zur Zubereitung von Kaffee umfasst die Kaffeemaschine zudem einen Behälter zum Speichern und mit einer Einrichtung zum Erhitzen von Wasser, eine Kaffeekanne, eine Halterung für den Auffangbehälter für Kaffeemehl und eine Fördervorrichtung für die Förderung des erhitzten Wassers in den Auffangbehälter. Der Kaffee kann in dem Auffangbehälter zubereitet werden, wobei der zubereitete Kaffee durch eine Auslassöffnung in dem Auffangbehälter in die Kaffeekanne einleitbar ist. Anstelle der Kaffeekanne kann beispielsweise auch eine Tasse, ein Becher oder ein anderes Gefäß eingesetzt sein.

Das Verfahren zum Betrieb einer Mahlvorrichtung umfasst das Mahlen von Kaffee zu Kaffeepartikeln in einem Mahlwerk, um Kaffeemehl zu erhalten. Das Kaffeemehl wird anschließend in einen Schacht geführt und aus dem Schacht durch ein Ausgabeelement in einen Auffangbehälter ausgegeben, wobei erfindungsgemäß mindestens zwei Elektroden Luft in dem Ausgabeelement ionisieren, sodass die ionisierte Luft die Kaffeepartikel und somit das Kaffeemehl elektrostatisch entlädt. Dies hat den Vorteil, dass die Verschmutzung der Mahlvorrichtung während des Mahlverfahrens durch elektrostatisch geladene Kaffeepartikel verringert wird, wobei das Verfahren mit erhöhter Sicherheit, durchgeführt werden kann, es zu weniger Schmutzbildung und daraus folgender Korrosion kommen kann, und sich die Mahlvorrichtung anschließend vereinfacht Reinigen lässt.

Die Mahlvorrichtung kann hierbei ein an sich eigenständiges Gerät sein oder als Baugruppe in einem Gehäuse eines Gerätes zur Getränkezubereitung integriert sein, in der der Auffangbehälter an derselben Stelle angeordnet ist, an der er auch zur Zubereitung des Kaffees eingesetzt werden kann.

Vorzugsweise weist die Mahlvorrichtung eine Leiterplatte zur Stromversorgung der mindestens zwei Elektroden auf. Diese Leiterplatte, sowie die Mahlvorrichtung, beziehungsweise die Kaffeemaschine kann Steuerschaltungen, Wechselrichter, Transformatoren, Spannungswandler oder Gleichrichter zur Spannungsanpassung auf eine gewünschte Spannung und eine gewünschte Stromstärke an den mindestens zwei Elektroden, beziehungsweise an die Korngröße des Kaffeemehls aufweisen. Zusätzlich oder anstelle der Ionisierung der im Sinne der Erfindung stationären Luft im Ausgabeelement kann in der Mahlvorrichtung auch ein bewegter ionisierter Luftstrom angewendet werden, um das Kaffeemehl noch präziser zu leiten und/oder zu entladen.

Die Erfindung wird nachfolgend anhand eines Ausführungsbeispiels mit Bezug auf die beigefügten Zeichnungen näher erläutert. Es zeigen:
- Figur 1:: eine Schnittdarstellung einer erfindungsgemäßen Mahlvorrichtung,
- Figur 2:: eine perspektivische Darstellung der Positionierung der mindestens zwei Elektroden im Ausgabeelement,
- Figur 3:: eine Frontansicht einer erfindungsgemäßen Kaffeemaschine,
- Figur 4:: Elektroden in einer Halterung für die Mahlvorrichtung, und
- Figur 5:: eine Ansicht einer Leiterplatte für die Mahlvorrichtung.

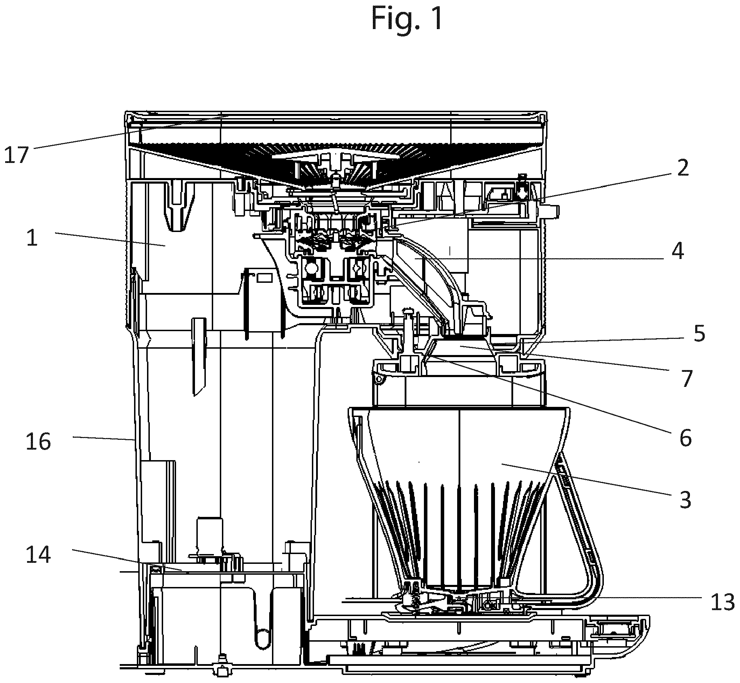

Figur 1 zeigt eine erfindungsgemäße Mahlvorrichtung 1 mit einem Mahlwerk 2 zum Mahlen von Kaffee zu Kaffeemehl, neben dem ein Schacht 4 angeordnet ist. Kaffee ist durch einen Bohnenbehälter 17 in einem Gehäuse 16 der Mahlvorrichtung 1 in das Mahlwerk 2 einführbar. Das Kaffeemehl ist durch Fliehkräfte und Schwerkraft aus dem Mahlwerk 2 durch den Schacht 4 in ein Ausgabeelement 5 einleitbar, in dem die Luft durch mindestens zwei Elektroden 6, die an einer Innenseite 7 des Ausgabeelementes 5 angeordnet sind und an denen vorzugsweise eine Spannung zwischen 12 V und 1500 V anliegt, ionisierbar ist. Eine elektrostatische Ladung des Kaffeemehls, die durch Reibung in dem Mahlwerk 2 entstehen kann, ist durch Kontakt mit der ionisierten Luft, beziehungswiese durch Kontakt mit einer gegensätzliche Ladung der Luftpartikel, aufhebbar, sodass das Ausgabeelement 5, dass in einem oberen Bereich die Form eines Kegelstumpfes aufweist, das Kaffeemehl in einen Auffangbehälter ausgibt. Die Mantellinie und die Kegelachse des Kegelstumpfes weisen bevorzugt einen Winkel zwischen 10° und 60° zueinander auf. Das Kaffeemehl erreicht diesen Auffangbehälter 3, der in diesem Beispiel ein Trichter mit einer Auslassöffnung 13 zur anschließenden Getränkezubereitung ist, durch eine Ausgabe neben den mindestens zwei Elektroden 6.

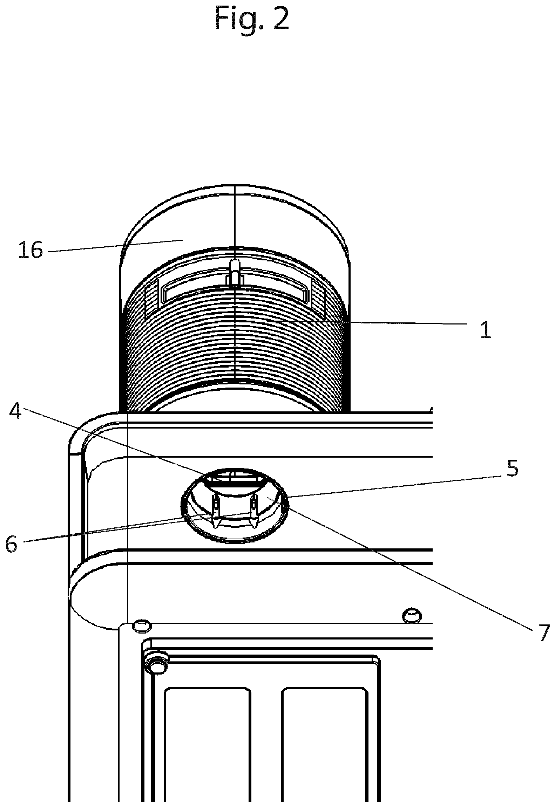

In Figur 2 ist eine perspektivische Ansicht der Mahlvorrichtung 1 dargestellt. Das unter dem Schacht 4 angeordnete Ausgabeelement 5 ist unterhalb des Gehäuses 16 sichtbar. Zwei Elektroden 6, die die Luft in dem Ausgabeelement 5 ionisieren sind als Spitzen ausgebildet, die einen Durchmesser von 0,2 mm bis 2 mm aufweisen und an ihrem Ende im Wesentlichen kegelförmig, beziehungsweise spitzwinklig zulaufen. Die zwei Elektroden 6 sind auf derselben Höhe versetzt zu einer Sekante der Innenseite 7 des Ausgabeelementes 5 vorzugsweise mit einer Entfernung von 10 mm bis 40 mm nach unten zeigend, außerhalb eines Innenraums des Ausgabeelementes 5 angeordnet.

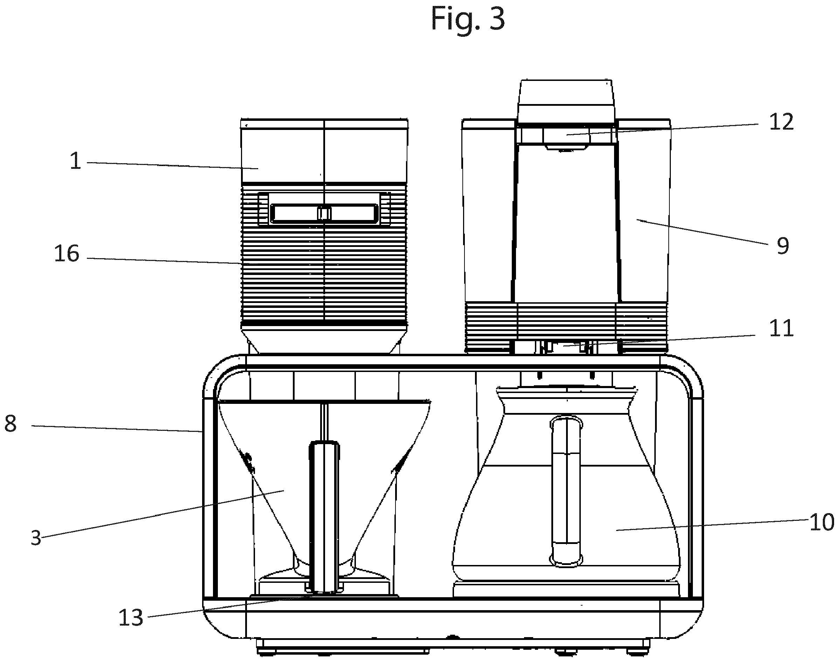

Figur 3 zeigt eine Frontansicht einer erfindungsgemäßen Kaffeemaschine 8, die eine erfindungsgemäße Mahlvorrichtung 1 aufweist. Das Gehäuse 16 der Mahlvorrichtung 1 ist über einem Auffangbehälter 3, der ein Trichter mit einer Auslassöffnung 13 ist, angeordnet, sodass gemahlener Kaffee als Kaffeemehl in den Auffangbehälter 3 ausgeben werden kann. Der Auffangbehälter 3 ist unterhalb des Ausgangs einer Fördervorrichtung 12 für heißes Wasser, dass in einem Behälter 9 erhitzt wird in einer Halterung 11 über einer Kaffeekanne 10 einsetzbar, sodass die Kaffeemaschine 1 in dem Auffangbehälter 3 Kaffee aufbrühen kann, der beispielsweise durch einen Filter in dem Auffangbehälter 3 durch eine Auslassöffnung 13 in die Kaffeekanne 11 einleitbar ist.

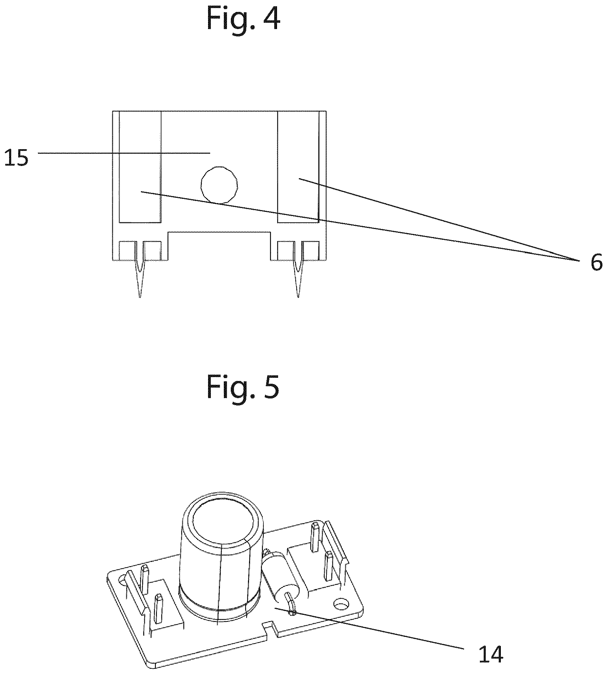

In Figur 4 ist eine Halterung 15 dargestellt, mit der zwei Elektroden 6, die als Spitzen mit jeweiligen Platten zum Einstecken der Elektroden in die Stromversorgung ausgebildet sind, im Ausgabeelement 5 montierbar sind.

In Figur 5 ist eine Leiterplatte 14 dargestellt, die Steuerschaltungen, Wechselrichter, Transformatoren, Filter, Spannungswandler oder Gleichrichter zur Spannungsanpassung der Spannung an den Elektroden 6 aufweist, sodass die Spannung beispielsweise auf die Korngröße des Kaffeemehls einstellbar ist.

### Bezugszeichenliste

- 1: Mahlvorrichtung
- 2: Mahlwerk
- 3: Auffangbehälter
- 4: Schacht
- 5: Ausgabeelement
- 6: Elektroden
- 7: Innenseite
- 8: Kaffeemaschine
- 9: Behälter
- 10: Kaffeekanne
- 11: Halterung
- 12: Beförderungsvorrichtung
- 13: Auslassöffnung
- 14: Leiterplatte
- 15: Halterung
- 16: Gehäuse
- 17: Bohnenbehälter

## Patentansprüche

1. Mahlvorrichtung (1) für Kaffee, die ein Mahlwerk (2) zum Mahlen des Kaffees zu Kaffeemehl, umfasst, wobei die Mahlvorrichtung außerdem einen Schacht (4) und ein Ausgabeelement (5) zur Ausgabe des Kaffeemehls aus dem Schacht umfasst, sodass das Kaffeemehl in einen Auffangbehälter (3) ausgegeben werden kann, der sich unter dem Ausgabeelement (5) befindet, **dadurch gekennzeichnet, dass** das Ausgabeelement (5) mindestens zwei Elektroden (6) aufweist, durch die die Luft in dem Ausgabeelement (5) ionisierbar ist.

2. Mahlvorrichtung (1) nach Anspruch 1, **dadurch gekennzeichnet, dass** die mindestens zwei Elektroden (6) auf derselben Höhe angeordnet sind.

3. Mahlvorrichtung (1) nach einem der vorgehenden Ansprüche, **dadurch gekennzeichnet, dass** zumindest ein Abschnitt des Ausgabeelements (5) die Form eines sich nach unten aufweitenden Kegelstumpfes aufweist.

4. Mahlvorrichtung (1) nach einem der vorgehenden Ansprüche, **dadurch gekennzeichnet, dass** die mindestens zwei Elektroden (6), soweit voneinander entfernt angeordnet sind, dass sie im Wesentlichen flächenbündig mit einer Innenseite (7) des Ausgabeelementes (5) in der Mahlvorrichtung (1) montiert sind.

5. Mahlvorrichtung (1) nach einem der vorgehenden Ansprüche, **dadurch gekennzeichnet, dass** die Mahlvorrichtung (1) eine Spannung zwischen den mindestens zwei Elektroden (6) für unterschiedliche Mahlgrade des Mahlwerks (2) einstellen kann.

6. Mahlvorrichtung (1) nach einem der vorgehenden Ansprüche, **dadurch gekennzeichnet, dass** die mindestens zwei Elektroden (6) in direkter Linie zwischen 10 mm und 40 mm voneinander entfernt angeordnet sind.

7. Mahlvorrichtung (1) nach einem der vorgehenden Ansprüche, **dadurch gekennzeichnet, dass** zwischen den mindestens zwei Elektroden (6) eine Spannung von 12 V bis 5000 V anliegt.

8. Mahlvorrichtung (1) nach einem der vorgehenden Ansprüche, **dadurch gekennzeichnet, dass** die mindestens zwei Elektroden (6) zwischen 5 % und 90 % der Innenseite (7) des Ausgabeelements (5) ausbilden.

9. Mahlvorrichtung (1) nach einem der vorgehenden Ansprüche, **dadurch gekennzeichnet, dass** die mindestens zwei Elektroden (6) jeweils eine Fläche von 25 mm² bis 2500 mm² aufweisen.

10. Mahlvorrichtung (1) nach einem der Ansprüche 1 bis 7, **dadurch gekennzeichnet, dass** die mindestens zwei Elektroden als Spitzen ausgebildet sind.

11. Mahlvorrichtung (1) nach einem der vorgehenden Ansprüche, **dadurch gekennzeichnet, dass** die Spannung zwischen den mindestens zwei Elektroden (6) eine Gleichspannung ist.

12. Mahlvorrichtung (1) nach einem der vorgehenden Ansprüche, **dadurch gekennzeichnet, dass** das Mahlwerk (2) und/oder der Schacht (4) und/oder das Ausgabeelement (5) und/oder die mindestens zwei Elektroden (6) so in der Mahlvorrichtung (1) montiert sind, dass sie einzeln aus der Mahlvorrichtung (1) herausnehmbar sind.

13. Mahlvorrichtung (1) nach einem der vorgehenden Ansprüche, **dadurch gekennzeichnet, dass** die mindestens zwei Elektroden (6) als in mindestens einer Aussparung aufgenommene Stifte im Ausgabeelement (5) angeordnet sind.

14. Kaffeemaschine (8), die einen Behälter (9) zum Speichern und mit einer Einrichtung zum Erhitzen von Wasser, eine Kaffeekanne (10), eine Halterung (11) für den Auffangbehälter (3) für Kaffeemehl und eine Fördervorrichtung (12) für die Förderung des erhitzten Wassers in den Auffangbehälter (3) umfasst, sodass in dem Auffangbehälter (3) Kaffee zubereitet werden kann, wobei der zubereitete Kaffee durch eine Auslassöffnung (13) in dem Auffangbehälter (3) in die Kaffeekanne (10) einleitbar ist, **dadurch gekennzeichnet, dass** die Kaffeemaschine (8) eine Mahlvorrichtung (1) nach einem der vorgehenden Ansprüche umfasst.

15. Verfahren zum Betrieb einer Mahlvorrichtung (1), wobei Kaffee in einem Mahlwerk (2) zu Kaffeepartikeln, die Kaffeemehl bilden, gemahlen und anschließend in einen Schacht (4) geführt wird, sodass das Kaffeemehl aus dem Schacht (4) durch ein Ausgabeelement (5) in einen Auffangbehälter (3) ausgegeben wird, **dadurch gekennzeichnet, dass** mindestens zwei Elektroden Luft in dem Ausgabeelement (5) ionisieren, sodass die ionisierte Luft die Kaffeepartikel und somit das Kaffeemehl elektrostatisch entlädt.
